(19)

(11) **EP 3 386 934 B1**

(12) # EUROPÄISCHE PATENTSCHRIFT

(45) Veröffentlichungstag und Bekanntmachung des Hinweises auf die Patenterteilung:
**03.03.2021 Patentblatt 2021/09**

(21) Anmeldenummer: **16816594.2**

(22) Anmeldetag: **06.12.2016**

(51) Int Cl.:
***C04B 37/02*** *(2006.01)* ***B32B 7/02*** *(2019.01)*
***B32B 9/00*** *(2006.01)* ***B32B 9/04*** *(2006.01)*
***B32B 15/01*** *(2006.01)* ***B32B 7/08*** *(2019.01)*
***B32B 7/12*** *(2006.01)* ***B32B 15/04*** *(2006.01)*

(86) Internationale Anmeldenummer:
**PCT/EP2016/079879**

(87) Internationale Veröffentlichungsnummer:
**WO 2017/097758 (15.06.2017 Gazette 2017/24)**

(54) **KUPFER-KERAMIK-SUBSTRAT, KUPFERHALBZEUG ZUR HERSTELLUNG EINES KUPFER-KERAMIK-SUBSTRATS UND VERFAHREN ZUR HERSTELLUNG EINES KUPFER-KERAMIK-SUBSTRATS**

COPPER-CERAMIC SUBSTRATE, COPPER PRECURSOR FOR PRODUCING A COPPER-CERAMIC SUBSTRATE AND PROCESS FOR PRODUCING A COPPER-CERAMIC SUBSTRATE

SUBSTRAT EN CUIVRE-CÉRAMIQUE, PRODUIT SEMI-FINI EN CUIVRE POUR LA FABRICATION D'UN SUBSTRAT EN CUIVRE-CÉRAMIQUE ET PROCÉDÉ POUR LA FABRICATION D'UN SUBSTRAT EN CUIVRE-CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2015 DE 102015224464**

(43) Veröffentlichungstag der Anmeldung:
**17.10.2018 Patentblatt 2018/42**

(73) Patentinhaber: **Aurubis Stolberg GmbH & Co. KG**
**52224 Stolberg (DE)**

(72) Erfinder:
- **ZEIGER, Karl**
  **52249 Eschweiler (DE)**
- **CAPPI,Benjamin**
  **4721 Neu-Moresnet (BE)**
- **LEHMANN, Helge**
  **52393 Hürtgenwald (DE)**
- **KOCH, Robert**
  **52224 Stolberg (DE)**

(74) Vertreter: **Müller Verweyen**
**Patentanwälte**
**Friedensallee 290**
**22763 Hamburg (DE)**

(56) Entgegenhaltungen:
**WO-A1-2013/015355** **US-A- 5 686 190**
**US-A- 6 022 426** **US-A- 6 113 761**
**US-A1- 2009 115 022**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 386 934 B1

## Beschreibung

Die Erfindung betrifft ein Kupfer-Keramik-Substrat mit den Merkmalen von Anspruch 1, ein Kupferhalbzeug zur Herstellung eines Kupfer-Keramik-Substrats mit den Merkmalen von Anspruch 7 und ein Verfahren zur Herstellung eines Kupfer-Keramik-Substrats mit den Merkmalen des Anspruch 9.

Kupfer-Keramik-Substrate (z.B. DCB, AMB) werden z.B. zur Herstellung von elektronischen Leistungsmodulen verwendet und sind ein Verbund aus einem Keramikträger mit entweder einseitig oder beidseitig darauf angeordneten Kupferschichten. Die Kupferschichten werden als Kupferhalbzeug in Form einer Kupferfolie üblicherweise mit einer Dicke von 0,1 bis 1,0 mm vorgefertigt und durch ein Verbindungsverfahren mit dem Keramikträger verbunden. Solche Verbindungsverfahren sind auch als DCB (Direct Copper Bonding) oder als AMB (Active Metal Brazing) bekannt. Bei einer höheren Festigkeit des Keramikträgers können jedoch auch Kupferlagen oder Kupferschichten mit einer noch größeren Dicke aufgebracht werden, was hinsichtlich der elektrischen und thermischen Eigenschaften grundsätzlich von Vorteil ist.

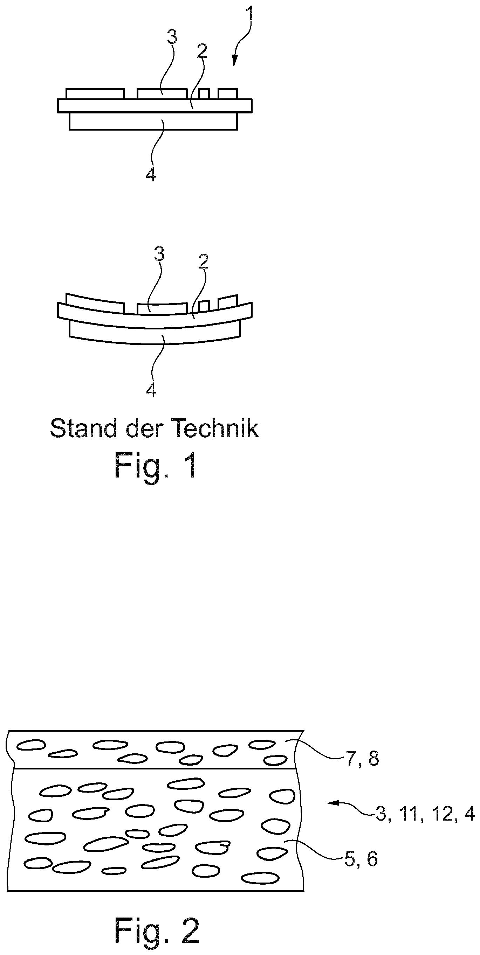

In der oberen Darstellung der Fig. 1 ist ein Kupfer-Keramik-Substrat 1 nach dem Stand der Technik mit einem Keramikträger 2 mit zwei auf den unterschiedlichen Seiten angeordneten Kupferschichten 3 und 4 zu erkennen, wobei in die in der Darstellung obere Kupferschicht 3 zusätzlich eine Struktur aus Leiterbahnen eingeätzt wurde, während die in der Darstellung untere Kupferschicht 4 ganzflächig ausgebildet ist.

Solche Kupfer-Keramik-Substrate sind beispielsweise aus den Druckschriften US 5,686,190, US 6,113,761, WO 2013/015355 A1 und US 2009/0115022 A1 bekannt.

US6022426 zeigt die Verbindung von einer OFHC-Cu Platte mit einer ETP-Cu Platte. Diese doppelte Cu-Platte wird mit einem keramischen Substrat verbunden und in einem elektronischen Leistungsmodul verwendet.

Als Keramikträger werden Keramikplatten z.B. aus Mullit, $Al_2O_3$, Si3N4, AlN, ZTA, ATZ, $TiO_2$, $ZrO_2$, MgO, CaO, $CaCO_3$ oder aus einer Mischung wenigstens zweier dieser Materialien verwendet.

Dabei wird die Kupferlage bei dem DCB-Verfahren durch folgende Verfahrensschritte mit der Keramikbasis verbunden:

- Oxidieren der Kupferlage derart, dass sich eine gleichmäßige Kupferoxidschicht ergibt;
- Auflegen der Kupferlage auf den Keramikträger;
- Erhitzen des Verbundes auf eine Prozesstemperatur zwischen 1060 °C und 1085 °C.

Dabei entsteht auf der Kupferlage eine eutektische Schmelze, die mit dem Keramikträger eine stoffschlüssige Verbindung eingeht. Dieser Prozess wird als Bonding bezeichnet. Sofern $Al_2O_3$ als Keramikträger verwendet wird, entsteht durch die Verbindung eine dünne Cu-Al-Spinellschicht.

Im Anschluss an den Bondingprozess erfolgt die Strukturierung der notwendigen Leiterbahnen durch Ätzen der zur Außenseite hin gewandten, also freien Oberfläche der Kupferlage. Anschließend werden die Chips aufgelötet und mittels Aufbringen von Bonddrähten die Verbindungen zu den Kontakten auf den Chipoberseiten hergestellt, wozu das Gefüge der freien Oberfläche der Kupferschicht möglichst homogen und fein strukturiert sein sollte. Zur Herstellung von Leistungsmodulen kann das Kupfer-Keramik-Substrat anschließend zusätzlich mit einer Bodenplatte verbunden werden.

Die Vorteile des beschriebenen Kupfer-Keramik-Substrats liegen vor allem in der hohen Stromtragfähigkeit des Kupfers und einer guten elektrischen Isolierung und mechanischen Unterstützung durch den Keramikträger. Ferner kann durch die DCB-Technologie eine hohe Haftfähigkeit der Kupferlage auf dem Keramikträger erzielt werden. Darüber hinaus sind die eingesetzten Kupfer-Keramik-Substrate beständig bei einer hohen Umgebungstemperatur, die in der Anwendung oftmals vorhanden sind.

Schwachpunkt der Kupfer-Keramik-Substrate ist die sogenannte Temperaturwechselbeständigkeit, eine Materialkenngröße, die das Versagen eines Bauteils nach einer bestimmten Anzahl von temporären thermisch induzierten Spannungen beschreibt. Dieser Parameter ist für die Lebenszeit der Leistungsmodule von Bedeutung, da sich extreme Temperaturgradienten im Betrieb der Module ergeben. Aufgrund der unterschiedlichen Wärmeausdehnungskoeffizienten von den eingesetzten Keramik- und KupferWerkstoffen werden dadurch während des Einsatzes in dem Kupfer-Keramik-Substrat mechanische Spannungen thermisch induziert, was nach einer bestimmten Zyklenanzahl zu einer Delamination der Kupferschicht von der Keramikschicht und/oder zu Rissen in der Keramikschicht und/oder in der Kupferschicht und somit zu einem Versagen des Bauteils führen kann. Das durch die thermische Beanspruchung bewirkte Durchbiegen des Kupfer-Keramik-Substrats 1 ist in der unteren Darstellung der Fig. 1 übertrieben dargestellt. Dabei bewirkt die unterschiedliche Ausdehnung der Kupferschichten 3 und 4 aufgrund der unterschiedlichen Kupfermenge eine Durchbiegung des Kupfer-Keramik-Substrats. Aufgrund dieser Krümmung des Kupfer-Keramik-Substrats 1 werden in den Kupferschichten 3 und 4 selbst und insbesondere in den Verbindungen der Kupferschichten 3 und 4 mit dem Keramikträger 2 Scher-, Druck- und Zugspannungen erzeugt, welche zum Lösen der Verbindungen der Kupferschichten 3 und 4 mit dem Keramikträger 2 und zu Rissen in den Kupferschichten 3 und 4 und/oder in dem Keramikträger 2 führen können.

Vor diesem Hintergrund liegt der Erfindung die Aufgabe zugrunde, ein Kupfer-Keramik-Substrat und ein Kupferhalbzeug zu schaffen, welches verbessert hinsichtlich der verschiedenen Anforderungen an die Kupferschicht und an das Substrat eingestellt werden kann. Außerdem ist es Aufgabe der Erfindung, ein kostengünstiges Verfahren zur Herstellung eines derartigen Kupfer-Keramik-Substrats zu schaffen.

Zur Lösung der Aufgabe wird ein Kupfer-Keramik-Substrat mit den Merkmalen des Anspruchs 1, ein Kupferhalbzeug mit den Merkmalen des Anspruchs 7 und ein Verfahren mit den Merkmalen des Anspruchs 9 vorgeschlagen. Weitere bevorzugte Weiterentwicklungen sind den darauf rückbezogenen Unteransprüchen, der Figur und der zugehörigen Beschreibung zu entnehmen.

Gemäß dem Grundgedanken der Erfindung wird vorgeschlagen, dass die Kupferschicht mindestens eine erste, dem Keramikträger zugewandte Schicht mit einer gemittelten ersten Korngröße und eine an der von dem Keramikträger abgewandten Seite der Kupferschicht angeordnete zweite Schicht mit einer gemittelten zweiten Korngröße aufweist, wobei die zweite Korngröße kleiner als die erste Korngröße ist, und die Kupferschicht in der ersten Schicht im Mittel eine Korngröße von größer als 100 $\mu$m, bevorzugt ca. 250 bis 1000 $\mu$m, und in der zweiten Schicht eine gemittelte Korngröße von kleiner als 100 $\mu$m, bevorzugt ca. 50 $\mu$m, oder die erste Schicht im Mittel eine Korngröße von größer als 150 $\mu$m, bevorzugt ca. 250 bis 2000 $\mu$m, und die zweite Schicht im Mittel eine Korngröße von kleiner als 150 $\mu$m, bevorzugt ca. 50 $\mu$m, aufweist.

Der Vorteil der vorgeschlagenen Lösung ist darin zu sehen, dass die Kupferschicht aufgrund der vorgeschlagenen unterschiedlichen Korngrößen des Gefüges der beiden Schichten so ausgebildet werden kann, dass sie erheblich besser den an die Kupferschicht gestellten Anforderungen genügt. Dabei ist es insbesondere von Vorteil, dass die Kupferschicht in der ersten Schicht eine im Mittel größere Korngröße aufweist, da die Kupferschicht aufgrund der größeren Korngröße und der dadurch bedingten niedrigeren Dehngrenze eine verbesserte Temperaturwechselbeständigkeit aufweist, so dass die Wahrscheinlichkeit einer Delamination oder des Entstehens von Rissen verringert werden kann. Der Zusammenhang von Dehngrenze und Korngröße wird in der Hall-Petch-Beziehung beschrieben:

$$\sigma_y = \sigma_0 + \frac{K}{\sqrt{d_K}},$$

wobei $\sigma_y$ die Dehngrenze, $\sigma_0$ und K materialabhängige Konstanten und $d_K$ die Korngröße sind.

Andererseits weist die Kupferschicht an der zur Außenseite hin gerichteten, von dem Keramikträger abgewandten Seite eine zweite Schicht mit einer feineren Korngröße auf, wodurch die Kupferschicht an dieser Seite ein höheres Härte- und Festigkeitsniveau und eine höhere Dehngrenze aufweist, was wiederum für Anwendungsbereiche mit hohen Belastungen (wie. z.B. Vibrationen) von Vorteil ist. Des Weiteren ist eine feinere Kornstruktur für eine weitere Verarbeitung über optische Systeme vorteilhaft. Während des Bearbeitungsprozesses (z.B. Ätzprozess) zur Schaffung der Leiterstruktur sind feine Korngrößen ferner bevorzugt, da dadurch scharfe Kanten und feine Strukturen besser realisiert werden können. Grobe Körner würden hier zu tiefen Ätzkratern entlang den Korngrenzen führen, was die Rauigkeit der Kupferoberfläche erhöhen würde. Dazu kommt der optische Eindruck, der bei feinen Korngrößen als homogener interpretiert wird. Darüber hinaus ist eine feine Struktur an der Oberfläche für das Bonden von Drähten von Vorteil.

Insgesamt kann durch die erfindungsgemäße Lösung damit ein Kupfer-Keramik-Substrat mit einer hohen Temperaturwechselbeständigkeit bei einer gleichzeitig guten Bearbeitbarkeit, einer hohen Festigkeit und hochwertigen optischen Eigenschaften der freien Oberfläche der Kupferschicht geschaffen werden.

In jedem Fall können durch die unterschiedlichen Korngrößen der beiden Schichten die an die Kupferschicht gestellten Anforderungen erheblich besser erfüllt werden, als dies bisher durch eine Kupferschicht mit einer einheitlichen Korngröße möglich gewesen ist. Dabei kann die Kupferschicht durch die Wahl der Korngrößen in den beiden Schichten in gewissen Grenzen individuell an die gestellten Anforderungen optimiert werden, ohne dass die Optimierung hinsichtlich einer der Eigenschaften zwangsläufig einen nachteiligen Einfluss auf eine der anderen Eigenschaften hat. Die Korngröße wird praktisch als eine Kenngröße verwendet, durch die die Eigenschaften der Kupferschicht auch unter Verwendung ein und desselben Werkstoffs bewusst hinsichtlich der verschiedenen zu erfüllenden Anforderungen verbessert werden können.

Dabei kann zwischen der ersten Schicht und dem Keramikträger selbstverständlich auch eine weitere dünne dritte Schicht mit einer feineren Kornstruktur vorgesehen sein, ohne dass dadurch der Erfindungsgedanke verlassen wird. Wichtig ist nur, dass die erste Schicht, welche in Bezug zu der zweiten Schicht dem Keramikträger zugewandt ist, die gröbere Kornstruktur aufweist. Die erste Schicht ist in diesem Fall zwischen der zweiten und der dritten Schicht angeordnet und bildet praktisch den Kern der Kupferschicht und ist damit für das Verformungsverhalten des Substrates bei einer thermischen Beanspruchung maßgebend. Der Vorteil der Erfindung wird in diesem Fall ebenso genutzt, da die Krümmung in der Kupferschicht aufgrund der gröberen Kornstruktur der ersten Kupferschicht und die damit zusammenhängenden Spannungen in der Kupferschicht ebenso reduziert werden, obwohl die erste Schicht nicht unmittelbar an dem Keramikträger anliegt, sondern durch die dritte Schicht von dem Keramikträger getrennt ist. Wichtig ist nur, dass die erste Schicht so dick ist, dass durch die erste Schicht die durch die thermische Beanspruchung bedingten Werkstoffspannungen in der Kupferschicht positiv beeinflusst und insbesondere verringert werden.

Die unterschiedlichen Gefüge in der Kupferschicht können z.B. besonders einfach durch eine gezielte Temperaturbehandlung der Kupferschicht erzielt werden. Alternativ können auch mindestens zwei unterschiedliche Kupferwerkstoffe mit verschiedenen Korngrößen z.B. durch Plattieren zu einer Kupferschicht miteinander verbunden werden. Dabei können die unterschiedlichen Kupferwerkstoffe in Form von vorgefertigten Bändern in einem vorangegangenen Arbeitsschritt zu einem Kupferhalbzeug miteinander verbunden werden. Alternativ kann auch zuerst die erste Schicht mit der größeren Korngröße auf dem Keramikträger und anschließend die zweite Schicht mit der feineren Korngröße auf der ersten Schicht mit der größeren Korngröße aufgebracht werden.

Ferner können auch zwei unterschiedliche Kupferwerkstoffe mit identischen oder beliebigen Korngrößen miteinander verbunden werden, deren Hochtemperatureigenschaften so eingestellt sind, dass bei einer Temperaturbehandlung in der ersten Schicht ein Gefüge mit einer großen Korngröße und in der zweiten Schicht ein Gefüge mit einer kleineren Korngröße entsteht. Im Idealfall kann für die Hochtemperaturbehandlung der Bonding-Prozess im DCB- oder AMB-Verfahren selbst genutzt werden. In diesem Fall kann das unterschiedliche Gefüge an den beiden Seiten durch eine Kombination der Verwendung von zwei unterschiedlichen Kupferwerkstoffen in Verbindung mit einer speziellen Temperaturbehandlung erzielt werden.

Dabei wird weiter vorgeschlagen, dass der Kupferwerkstoff der ersten Schicht Cu-ETP ist, und der Kupferwerkstoff an der der Außenseite zugewandten Seite, in der zweiten Schicht Cu-OF, weiter bevorzugt Cu-OFE, ist. Cu-OF und besonders Cu-OFE hat in dem Erstarrungsdiagramm einen ausgeprägten stufenartigen Schmelzpunkt, d.h. es erstarrt und schmilzt schlagartig beim Unter- oder Überschreiten der Schmelztemperatur. Cu-ETP weist Anteile von Cu-Oxydul auf, welches dazu führt, dass das Cu-ETP in einem in dem Erstarrungsdiagramm schräg abfallenden Schmelzintervall erstarrt bzw. aufschmilzt. Da der Schmelzpunkt des Cu-OF oberhalb der Solidustemperatur von Cu-ETP liegt, ist das gesamte Cu-OF während des Aufschmelzens des Cu-ETP noch erstarrt. Der Vorteil der Verwendung des Cu-ETP's als erste Schicht liegt darin, dass die Kupferschicht dadurch im Bereich der ersten Schicht beim Überschreiten der Solidustemperatur des Cu-ETP's, welche der Bondingtemperatur des DCB-Verfahrens entspricht, zur Schaffung der Verbindung mit dem Keramikträger beginnt anzuschmelzen, während die freie Oberfläche der Kupferschicht, die durch das Cu-OF gebildet ist, noch vollständig erstarrt ist. Aufgrund dieses Anschmelzens des Cu-Oxyduls in dem Cu-ETP kann eine verbesserte Verbindung und insbesondere Haftfestigkeit zwischen der ersten Kupferschicht und dem Keramikträger erzielt werden. Ferner bildet das Cu-ETP beim anschließenden Erkalten selbsttätig eine gröbere Kornstruktur als das Cu-OF der freien Oberfläche aus, wodurch die verbesserte Temperaturwechselbeständigkeit nach dem oben beschriebenen Prinzip selbsttätig erzielt wird.

Nachfolgend wird die Erfindung anhand eines bevorzugten Ausführungsbeispiels näher beschrieben. In den Figuren sind im Einzelnen zu erkennen:

Fig. 1: ein Kupfer-Keramik-Substrat nach dem Stand der Technik;

Fig. 2: ein Kupferhalbzeug mit zwei Schichten aus unterschiedlichen Kupferwerkstoffen; und

Fig. 3: ein erfindungsgemäßes Kupfer-Keramik-Substrat in Schnittdarstellung.

Leistungsmodule sind Halbleiterbauelemente der Leistungselektronik und werden als Halbleiterschalter eingesetzt. Sie enthalten in einem Gehäuse mehrere vom Kühlkörper elektrisch isolierte Leistungshalbleiter (Chips). Diese werden auf eine metallisierte Oberfläche einer elektrisch isolierenden Platte (z.B. aus Keramik) mittels Löten oder Kleben aufgebracht, damit einerseits die Wärmeabgabe in Richtung Bodenplatte, andererseits aber auch die elektrische Isolierung gewährleistet ist. Der Verbund aus metallisierten Schichten und isolierender Platte wird als Kupfer-Keramik-Substrat bezeichnet und wird großtechnisch über die sogenannte DCB-Technologie (Direct Copper Bonding) realisiert.

Die Kontaktierung der Chips wird durch Bonden mit dünnen Bonddrähten realisiert. Darüber hinaus können weitere Baugruppen unterschiedlichster Funktion (z. B. Sensoren, Widerstände) vorhanden und integriert sein.

Zur Herstellung eines DCB-Substrates werden Keramikträger (z.B. $Al_2O_3$, Si3N4, AIN, ZTA, ATZ) ober- und unterseitig mit Kupferlagen in einem Bondprozess miteinander verbunden. In Vorbereitung auf diesen Prozess können die Kupferlagen vor dem Auflegen auf den Keramikträger oberflächlich oxidiert (z.B. chemisch oder thermisch) und anschließend auf den Keramikträger aufgelegt werden. Die Verbindung entsteht in einem Hochtemperaturprozess zwischen 1060 °C und 1085 °C, wobei auf der Oberfläche der Kupferlage eine eutektische Schmelze entsteht, die mit dem Keramikträger eine Verbindung eingeht. Diese Verbindung besteht beispielsweise im Falle von Kupfer (Cu) auf Aluminiumoxid ($Al_2O_3$) aus einer dünnen Cu-Al-Spinellschicht.

In der Fig. 1 ist ein Kupfer-Keramik-Substrat 1 nach dem Stand der Technik mit einem Keramikträger 2 und zwei an den Oberflächen des Keramikträgers 2 gehaltenen Kupferschichten 3 und 4 zu erkennen.

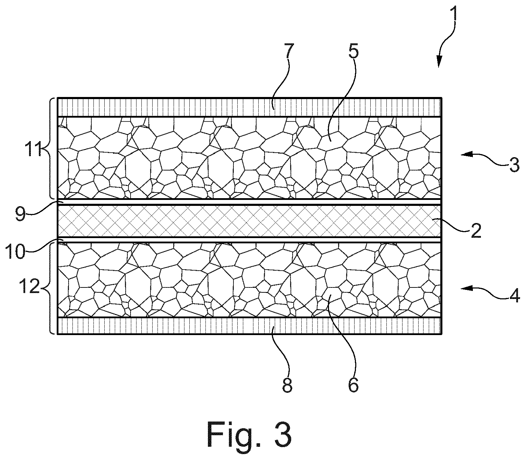

In der Fig. 3 ist ein erfindungsgemäß weiterentwickeltes Kupfer-Keramik-Substrat 1 mit einem Keramikträger 2 und zwei Kupferschichten 3 und 4 zu erkennen. Die beiden erfindungsgemäß weiterentwickelten Kupferschichten 3 und 4 in der Fig. 3 weisen jeweils eine erste, dem Keramikträger 2 zugewandte Schicht 5 und 6 auf, welche eine gröbere Gefügestruktur aufweisen. Die ersten Schichten 5 und 6 sind bevorzugt die Schichten, mit denen die Kupferschichten 3 und 4 an dem Keramikträger 2 anliegen, und welche die Verbindung mit dem Keramikträger 2 bilden. Die ersten Schichten 5 und 6 der Kupferschichten 3 und 4 sind an der freien Außenseite jeweils durch eine zweite Schicht 7 und 8 mit einer feineren Gefügestruktur mit einer gemittelten feineren Korngröße von weniger als 100 oder 150 $\mu$m, vorzugsweise von ca. 50 $\mu$m, abgedeckt. Die ersten Schichten 5 und 6 der beiden Kupferschichten 3 und 4 weisen dagegen eine gröbere Gefügestruktur mit einer gemittelten größeren Korngröße von größer als 100 oder 150 $\mu$m, vorzugsweise von ca. 250 bis 1000 $\mu$m oder 250 bis 2000 $\mu$m auf. Die Gefügestrukturen der Kupferschichten 3 und 4 weisen damit in den dem Keramikträger 2 zugewandten ersten Schichten 5 und 6 eine im Mittel ca. 10-fach größere Korngröße als in den nach außen hin weisenden Schichten 7 und 8 auf. Die ersten Schichten 5 und 6 können wesentlich dicker als die zweiten Schichten 7 und 8 sein und bilden die Grundschichten der Kupferschichten 3 und 4. Die zweiten Schichten 7 und 8 können wesentlich dünner ausgebildet sein und weisen eine Dicke von ca. 50 bis 100 $\mu$m auf und bilden die freien Oberflächen der Kupferschichten 3 und 4. Das mechanische Verhalten der Kupferschichten 3 und 4 wird aufgrund der erheblich größeren Dicke der ersten Schichten 5 und 6 mit der größeren Korngröße soweit verändert, dass die Kupferschichten 3 und 4 insgesamt eine niedrigere Dehngrenze und damit eine größere Temperaturwechselbeständigkeit aufweisen, während die zweiten Schichten 7 und 8 mit der wesentlich feineren Gefügestruktur lediglich die freie Oberfläche bilden.

Die Kupferschichten 3 und 4 können z.B. nach dem eingangs beschriebenen DCB-Verfahren mit dem Keramikträger 2 verbunden sein, so dass die beiden daran anliegenden ersten Schichten 5 und 6 der beiden Kupferschichten 3 und 4 durch eine stoffschlüssige Verbindung in den jeweiligen Oberflächenrandzonen 9 und 10 des Keramikträgers 2 mit dem Keramikträger 2 verbunden sind. Da die beiden Kupferschichten 3 und 4 in den ersten Schichten 5 und 6 eine erheblich gröbere Gefügestruktur mit einer großen Korngröße von 250 bis 1000 $\mu$m oder 250 bis 2000 $\mu$m aufweisen, weisen sie aufgrund der oben beschriebenen Hall-Petch-Beziehung eine niedrigere Dehngrenze als im Bereich der an den Außenseiten angeordneten zweiten Schichten 7 und 8 auf, so dass sie mit einer höheren Temperaturwechselbeständigkeit mit dem Keramikträger 2 verbunden sind, als dies der Fall wäre, wenn sie an dieser Seite dieselbe Korngröße von 50 $\mu$m wie an der äußeren Seite aufweisen würden. Damit sind die Kupferschichten 3 und 4 durch die vorgeschlagene Auslegung mit der größeren Korngröße an der Seite der Verbindung zu dem Keramikträger 2 speziell für eine hohe Temperaturwechselbeständigkeit in der Verbindung der Oberflächenrandzonen 9 und 10 ausgebildet. Demgegenüber können die Kupferschichten 3 und 4 an ihren äußeren Seiten aufgrund der feineren Gefügestruktur der zweiten Schichten 7 und 8 mit der feineren Korngröße von 50 $\mu$m erheblich einfacher und genauer zum Einbringen der Leiterstruktur bearbeitet werden. Außerdem weisen sie an dieser Seite eine größere Härte, Festigkeit und Dehngrenze auf, so dass die Lebensdauer des Kupfer-Keramik-Substrats 1 auch gegenüber äußeren Einwirkungen vergrößert werden kann. Darüber hinaus weist die feinkörnigere Struktur der die Oberfläche bildenden zweiten Schichten 7 und 8 Vorteile für das Verbinden von Drähten auf.

Die unterschiedliche Gefügestruktur der Kupferschichten 3 und 4 in den verschiedenen Schichten 5,6,7 und 8 kann durch eine gezielt vorgenommene Temperaturbehandlung oder auch durch die Verwendung von zwei unterschiedlichen Kupferwerkstoffen oder auch durch eine Kombination der beiden Maßnahmen erzielt werden. Gemäß einer bevorzugten Ausführungsform werden die beiden Kupferschichten 3 und 4 durch Plattieren (wie z.B. Walzplattieren) einer Schicht des Kupferwerkstoffs Cu-OF, bevorzugt Cu-OFE, mit einer Schicht des Kupferwerkstoffs CU-ETP zu einem Kupferhalbzeug 11 und 12 hergestellt, welches in der Fig. 2 zu erkennen ist. Die erste Schicht 5,6, gebildet durch das Cu-ETP und die zweite Schicht 7,8, gebildet durch das Cu-OF weisen hier eine identische oder zumindest vergleichbare Korngröße auf. Während des DCB-Verfahrens wird beispielsweise das voroxidierte Kupferhalbzeug 11 oder 12 auf den Keramikträger 2 aufgelegt und dann auf die Prozesstemperatur von 1060 °C bis 1085 °C erhitzt. Dabei schmilzt das Cu-Oxydul in der ersten Schicht 5,6, welche hier durch das Cu-ETP gebildet wird, an und bildet die Verbindungen in den Oberflächenrandzonen 9 und 10 mit dem Keramikträger 2 aus. Aufgrund der Temperatureinwirkung und des unterschiedlichen Rekristallisationsverhaltens der beiden Kupferwerkstoffe ändert sich das Gefüge dabei soweit, dass die Körner in dem Cu-ETP anschließend grob vorliegen, während die feinere Gefügestruktur in dem Cu-OF oder in dem Cu-OFE vorliegt.

Cu-OF bzw. Cu-OFE und Cu-ETP sind hochleitfähige Cu-Werkstoffe und weisen eine Leitfähigkeit von gleich oder mehr als 58 MS/m auf. Es sind jedoch auch Werkstoffe mit einer niedrigeren Leitfähigkeit denkbar. Ferner können die beiden Cu-Werkstoffe auch über andere Fügeverfahren, wie z.B. Schweißen, Löten, Heften, Kleben oder additive Fertigungsverfahren, miteinander verbunden werden. Ferner können die Kupferschichten 3 und 4 bedarfsweise auch durch weitere Cu-Werkstoffe oder Schichten ergänzt werden, soweit die Werkstoffeigenschaften der Kupferschichten 3 und 4 weiter verfeinert werden sollen.

Die beiden Kupferschichten 3 und 4 werden bevorzugt als Kupferhalbzeuge 11 und 12 jeweils durch Plattieren der beiden Cu-Werkstoffe vorgefertigt. Die Kupferhalbzeuge 11 und 12 weisen nach dem Bonden aufgrund der vorgeschlagenen Verwendung der verschiedenen Cu-Werkstoffe und der Temperatureinwirkung während des Bondens bereits an einer Seite eine Gefügestruktur mit einer feineren Korngröße von ca. 50

$\mu$m und an der anderen Seite eine Gefügestruktur mit einer größeren Korngröße von 250 bis 1000 $\mu$m auf. Dabei stellt das Bonden gleichzeitig bewusst eine Temperaturbehandlung dar, während der die Körner der ersten Schichten 5 und 6 der Kupferschichten 3 oder 4, welche dem Keramikträger 2 zugewandt sind, weiter wachsen, was wiederum positiv im Sinne einer weiter gesteigerten Temperaturwechselbeständigkeit der Kupferschichten 3 und 4 selbst und insbesondere im Bereich der Verbindungen 9 und 10 mit dem Keramikträger 2 ist. Gleichzeitig führt die Temperaturbehandlung nicht zu einer nennenswerten Vergrößerung der Korngröße der von dem Keramikträger 2 abgewandten Schichten 7 und 8 der Kupferschichten 3 oder 4 bzw. des Kupferhalbzeugs 11 und 12, so dass die Eigenschaften der Kupferschichten 3 und 4 an dieser Seite nicht nachteilig verändert werden.

Gemäß einer Ausführungsform werden zwei verschiedene Cu-Werkstoffe mittels Plattieren miteinander verbunden, so dass im Fertigmaterial die Hochtemperatureigenschaften so gezielt eingestellt werden können, dass in den Kupferschichten 3 und 4 während der Temperatureinwirkung auf den dem Keramikträger 2 zugewandten Seiten ein grobes Gefüge mit niedriger Dehngrenze und auf der freien Oberfläche ein feineres Gefüge mit den geforderten Oberflächeneigenschaften entsteht. Dabei können zwischen den ersten Schichten 5 und 6 mit dem gröberen Gefüge und dem Keramikträger 2 durchaus weitere Schichten auch mit einem feineren Gefüge vorhanden sein, sofern dies Vorteile für den jeweiligen Anwendungsfall liefert. Der Grundvorteil der verminderten Rissentstehung und der verhinderten Delamination bei einer Temperaturwechselbeanspruchung bleibt trotzdem erhalten, da die ersten Schichten 5 und 6 der Kupferschichten 3 und 4 auch in diesem Fall einen Kern mit einer verringerten Dehngrenze und einer dadurch erhöhten Temperaturwechselbeständigkeit bilden.

Ferner wird das Bonden hier bevorzugt neben der Schaffung der Verbindung zusätzlich als eine Temperaturbehandlung genutzt, mittels derer die erfindungsgemäß vorgeschlagene unterschiedliche Korngröße an den beiden Seiten der Kupferschichten 3 und 4 besonders einfach erreicht werden kann, wobei der Effekt weiter durch die Verwendung der beiden unterschiedlichen Kupferwerkstoffe verstärkt werden kann.

Die Kupferschichten 3 und 4 werden bevorzugt als Kupferhalbzeuge 11 und 12 vorgefertigt, welche durch Plattieren der beiden vorgeschlagenen Kupferwerkstoffe hergestellt werden. Dabei können die dem Keramikträger 2 zugewandten ersten Schichten 5 und 6, gebildet durch das Cu-ETP, wesentlich dicker ausgebildet sein und eine Art Trägerfunktion für die wesentlich dünneren zweiten Schichten 7 und 8, gebildet durch die Cu-OF Schicht, bilden.

Die Kupferhalbzeuge 11 und 12 können eine Dicke von 0,1 bis 1,0 mm aufweisen und werden in großen Abmaßen auf den Keramikträger 2 aufgelegt und durch das DCB-Verfahren mit dem Keramikträger 2 verbunden. Anschließend wird das großflächige Kupfer-Keramik-Substrat 1 in kleinere Einheiten geschnitten und weiter verarbeitet.

Neben dem verbesserten Kupfer-Keramik-Substrat 1 und den als Kupferhalbzeuge 11 und 12 vorgefertigten Kupferfolien liefert die Erfindung außerdem ein bevorzugtes kostengünstiges Verfahren zur Herstellung des Kupfer-Keramik-Substrats 1. Dabei wird das vorgeschlagene Kupfer-Keramik-Substrat 1 bevorzugt durch eine Temperaturbehandlung hergestellt, durch welche sich die unterschiedlichen Korngrößen in den beiden Schichten 5 und 6 bzw. 7 und 8 selbsttätig einstellen. Dabei können die Kupferschichten 3 und 4 vor der Verbindung mit dem Keramikträger 2 der Temperaturbehandlung unterzogen werden, oder es kann die Temperatureinwirkung während des Bondingverfahrens zur Beeinflussung der Gefügestruktur genutzt werden. Ferner können die Kupferschichten 3 und 4 auch durch Plattieren zweier unterschiedlicher Cu-Werkstoffe zusammengesetzt sein, welche bereits eine unterschiedliche Gefügestruktur aufweisen bzw. welche dann während der Temperaturbehandlung die unterschiedliche Gefügestruktur ausbilden.

## Patentansprüche

1. Kupfer-Keramik-Substrat (1) mit

    - einem Keramikträger (2), und
    - einer mit einer Oberfläche des Keramikträgers (2) verbundenen Kupferschicht (3,4),

    **dadurch gekennzeichnet, dass**

    - die Kupferschicht (3,4) mindestens eine erste, dem Keramikträger zugewandte Schicht (5,6) mit einer gemittelten ersten Korngröße und eine an der von dem Keramikträger (2) abgewandten Seite der Kupferschicht (3,4) angeordnete zweite Schicht (7,8) mit einer gemittelten zweiten Korngröße aufweist, wobei
    - die zweite Korngröße kleiner als die erste Korngröße ist, und
    - die erste Schicht (5,6) im Mittel eine Korngröße von größer als 100 $\mu$m, bevorzugt ca. 250 bis 1000 $\mu$m, und
    - die zweite Schicht (7,8) im Mittel eine Korngröße von kleiner als 100 $\mu$m, bevorzugt ca. 50 $\mu$m, aufweist,

    oder

    - die erste Schicht (5,6) im Mittel eine Korngröße von größer als 150 $\mu$m, bevorzugt ca. 250 bis 2000 $\mu$m, und
    - die zweite Schicht (7,8) im Mittel eine Korngröße von kleiner als 150 $\mu$m, bevorzugt ca. 50 $\mu$m,

aufweist.

**2.** Kupfer-Keramik-Substrat (1) nach Anspruch 1, **dadurch gekennzeichnet, dass**

- die erste und die zweite Schicht (5,6,7,8) der Kupferschicht (3,4) durch mindestens zwei unterschiedliche Kupferwerkstoffe gebildet sind.

**3.** Kupfer-Keramik-Substrat (1) nach Anspruch 2, **dadurch gekennzeichnet, dass**

- der Kupferwerkstoff der ersten Schicht (5,6) Cu-ETP ist.

**4.** Kupfer-Keramik-Substrat (1) nach einem der Ansprüche 2 oder 3, **dadurch gekennzeichnet, dass**

- der Kupferwerkstoff der zweiten Schicht (7,8) Cu-OF, weiter bevorzugt Cu-OFE ist.

**5.** Kupfer-Keramik-Substrat (1) nach einem der vorangegangenen Ansprüche, **dadurch gekennzeichnet, dass**

- die erste Schicht (5,6) eine niedrigere Dehngrenze als die zweite Schicht (7,8) aufweist.

**6.** Kupfer-Keramik-Substrat (1) nach einem der vorangegangenen Ansprüche, **dadurch gekennzeichnet, dass**

- die erste Schicht (5,6) eine Schmelztemperatur von 1060 °C bis 1085 °C aufweist.

**7.** Kupferhalbzeug (11,12) zur Herstellung eines Kupfer-Keramik-Substrats (1), **dadurch gekennzeichnet, dass**

- das Kupferhalbzeug (11,12) mindestens eine erste Schicht (5,6) mit einer gemittelten ersten Korngröße und eine zweite Schicht (7,8) mit einer gemittelten zweiten Korngröße aufweist, wobei die beiden gemittelten Korngrößen unterschiedlich sind, wobei
- die erste Schicht (5,6) im Mittel eine Korngröße von größer als 100 $\mu$m, bevorzugt ca. 250 bis 1000 $\mu$m, und die zweite Schicht (7,8) im Mittel eine Korngröße von kleiner als 100 $\mu$m, bevorzugt ca. 50 $\mu$m, aufweist, oder
- die erste Schicht (5,6) im Mittel eine Korngröße von größer als 150 $\mu$m, bevorzugt ca. 250 bis 2000 $\mu$m, und
- die zweite Schicht (7,8) im Mittel eine Korngröße von kleiner als 150 $\mu$m, bevorzugt ca. 50 $\mu$m, aufweist.

**8.** Kupferhalbzeug (11,12) nach Anspruch 7, **dadurch gekennzeichnet, dass**

- die beiden Schichten (5,6,7,8) durch unterschiedliche Kupferwerkstoffe gebildet sind.

**9.** Verfahren zur Herstellung eines Kupfer-Keramik-Substrats (1) mit den Merkmalen einer der Ansprüche 1 bis 6, **dadurch gekennzeichnet, dass**

- die unterschiedlichen Korngrößen der beiden Schichten (5,6,7,8) der Kupferschicht (3,4) durch die Temperatureinwirkung während eines Bonding-Verfahrens zur Verbindung der Kupferschicht (3,4) mit dem Keramikträger (2) erzielt werden.

**10.** Verfahren nach Anspruch 9, **dadurch gekennzeichnet, dass**

- die Kupferschicht (3,4) durch ein Kupferhalbzeug (11,12) nach Anspruch 7 oder nach Anspruche 8 gebildet ist.

## Claims

**1.** Copper ceramic substrate (1) comprising

- a ceramic carrier (2), and
- a copper layer (3, 4) joined to a surface of the ceramic carrier (2),

**characterised in that**

- the copper layer (3, 4) comprises at least one first layer (5, 6), which faces the ceramic carrier and has an average first grain size, and a second layer (7, 8), which is arranged on the face of the copper layer (3, 4) facing away from the ceramic carrier (2) and has an average second grain size,
- the second grain size being smaller than the first grain size, and
- the first layer (5, 6) having an average grain size of greater than 100 $\mu$m, preferably approximately 250 to 1000 $\mu$m, and
- the second layer (7, 8) having an average grain size of less than 100 $\mu$m, preferably approximately 50 $\mu$m,

or

- the first layer (5, 6) having an average grain size of greater than 150 $\mu$m, preferably approximately 250 to 2000 $\mu$m, and
- the second layer (7, 8) having an average grain size of less than 150 $\mu$m, preferably approximately 50 $\mu$m.

**2.** Copper ceramic substrate (1) according to claim 1, **characterised in that**

- the first and the second layer (5, 6, 7, 8) of the copper layer (3, 4) are formed by at least two different copper materials.

**3.** Copper ceramic substrate (1) according to claim 2, **characterised in that**

- the copper material of the first layer (5, 6) is Cu-ETP.

**4.** Copper ceramic substrate (1) according to either claim 2 or claim 3, **characterised in that**

- the copper material of the second layer (7, 8) is Cu-OF, more preferably Cu-OFE.

**5.** Copper ceramic substrate (1) according to any of the preceding claims, **characterised in that**

- the first layer (5, 6) has a lower proof stress than the second layer (7, 8).

**6.** Copper ceramic substrate (1) according to any of the preceding claims, **characterised in that**

- the first layer (5, 6) has a melting point of 1060°C to 1085°C.

**7.** Copper semi-finished product (11, 12) for producing a copper ceramic substrate (1), **characterised in that**

- the copper semi-finished product (11, 12) comprises at least one first layer (5,6) that has an average first grain size and a second layer (7, 8) that has an average second grain size, the two average grain sizes being different,
- the first layer (5, 6) having an average grain size of greater than 100 μm, preferably approximately 250 to 1000 μm, and the second layer (7, 8) having an average grain size of less than 100 μm, preferably approximately 50 μm, or
- the first layer (5, 6) having an average grain size of greater than 150 μm, preferably approximately 250 to 2000 μm, and
- the second layer (7, 8) having an average grain size of less than 150 μm, preferably approximately 50 μm.

**8.** Copper semi-finished product (11, 12) according to claim 7, **characterised in that**

- the two layers (5, 6, 7, 8) are formed by different copper materials.

**9.** Method for producing a copper ceramic substrate (1) having the features of any of claims 1 to 6, **characterised in that**

- the different grain sizes of the two layers (5, 6, 7, 8) of the copper layer (3, 4) are achieved by applying heat during a bonding method for joining the copper layer (3, 4) to the ceramic carrier (2).

**10.** Method according to claim 9, **characterised in that**

- the copper layer (3, 4) is formed by a copper semi-finished product (11, 12) according to claim 7 or according to claim 8.

**Revendications**

**1.** Substrat en cuivre-céramique (1) comportant

- un support en céramique (2), et
- une couche de cuivre (3, 4) reliée à une surface du support en céramique (2), **caractérisé en ce**
- **que** la couche de cuivre (3, 4) présente au moins une première couche (5, 6), avec une première taille granulaire moyenne, orientée vers le support en céramique, et une deuxième couche (7, 8), avec une deuxième taille granulaire moyenne, disposée sur le côté de la couche de cuivre (3, 4) opposé au support en céramique (2), dans lequel
- la deuxième taille granulaire est plus petite que la première taille granulaire, et
- la première couche (5, 6) présente en moyenne une taille granulaire supérieure à 100 μm, de préférence environ 250 à 1 000 μm, et
- la deuxième couche (7, 8) présente en moyenne une taille granulaire inférieure à 100 μm, de préférence environ 50 μm,
ou
- la première couche (5, 6) présente en moyenne une taille granulaire supérieure à 150 μm, de préférence environ 250 à 2 000 μm, et
- la deuxième couche (7, 8) présente en moyenne une taille granulaire inférieure à 150 μm, de préférence environ 50 μm.

**2.** Substrat en cuivre-céramique (1) selon la revendication 1, **caractérisé en ce**

- **que** les première et deuxième couches (5, 6, 7, 8) de la couche de cuivre (3, 4) sont formées par au moins deux matières à base de cuivre différentes.

**3.** Substrat en cuivre-céramique (1) selon la revendication 2, **caractérisé en ce**

- **que** la matière à base de cuivre de la première couche (5, 6) est un Cu-ETP.

4. Substrat en cuivre-céramique (1) selon l'une des revendications 2 ou 3, **caractérisé en ce**

- **que** la matière à base de cuivre de la deuxième couche (7, 8) est un Cu-OF, plus préférentiellement un Cu-OFE.

5. Substrat en cuivre-céramique (1) selon l'une des revendications précédentes, **caractérisé en ce**

- **que** la première couche (5, 6) présente une limite d'élasticité inférieure à la deuxième couche (7, 8).

6. Substrat en cuivre-céramique (1) selon l'une des revendications précédentes, **caractérisé en ce**

- **que** la première couche (5, 6) présente une température de fusion de 1 060 °C à 1085 °C.

7. Produit semi-fini en cuivre (11, 12) pour la fabrication d'un substrat en cuivre-céramique (1), **caractérisé en ce**

- **que** le produit semi-fini en cuivre (11, 12) présente au moins une première couche (5, 6) avec une première taille granulaire moyenne et une deuxième couche (7, 8) avec une deuxième taille particulaire moyenne, dans lequel les deux tailles granulaires moyennes sont différentes, dans lequel
- la première couche (5, 6) présente en moyenne une taille granulaire supérieure à 100 μm, de préférence environ 250 à 1 000 μm, et la deuxième couche (7, 8) présente en moyenne une taille granulaire inférieure à 100 μm, de préférence environ 50 μm, ou
- la première couche (5, 6) présente en moyenne une taille granulaire supérieure à 150 μm, de préférence environ 250 à 2 000 μm, et
- la deuxième couche (7, 8) présente en moyenne une taille granulaire inférieure à 150 μm, de préférence environ 50 μm.

8. Produit semi-fini en cuivre (11, 12) selon la revendication 7, **caractérisé en ce**

- **que** les deux couches (5, 6, 7, 8) sont formées par des matières à base de cuivre différentes.

9. Procédé de fabrication d'un substrat en cuivre-céramique (1) doté des caractéristiques selon l'une des revendications 1 à 6, **caractérisé en ce**

- **que** les tailles granulaires différentes des deux couches (5, 6, 7, 8) de la couche de cuivre (3, 4) sont obtenues par l'effet de la température au cours d'un procédé de liaison pour la liaison de la couche de cuivre (3, 4) avec le support en céramique (2).

10. Procédé selon la revendication 9, **caractérisé en ce**

- **que** la couche de cuivre (3, 4) est formée par un produit semi-fini en cuivre (11, 12) selon la revendication 7 ou la revendication 8.

1
3
2
4

3
2
4

Stand der Technik

Fig. 1

7, 8
3, 11, 12, 4
5, 6

Fig. 2

1
7
5
11
3
9
2
10
12
4
8
6

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5686190 A
- US 6113761 A
- WO 2013015355 A1
- US 20090115022 A1
- US 6022426 A